# EUROPÄISCHE PATENTSCHRIFT

(11) **EP 2 408 580 B1**
(45) Veröffentlichungstag und Bekanntmachung des Hinweises auf die Patenterteilung: **16.11.2016**
(21) Anmeldenummer: 10702841.7
(22) Anmeldetag: 04.02.2010
(51) Int. Cl.: B23B 37/00

(54) **SCHNITTSTELLE FÜR EINEN WERKZEUGAKTOR BZW. FÜR EIN WERKZEUG, INSBESONDERE ZUM VERBINDEN MIT EINER WERKZEUGMASCHINE**
INTERFACE FOR A TOOL ACTUATOR AND/OR FOR A TOOL, IN PARTICULAR FOR CONNECTING TO A MACHINE TOOL
INTERFACE POUR UN ACTIONNEUR D'OUTIL OU POUR UN OUTIL, EN PARTICULIER DESTINÉ À ÊTRE RELIÉ À UNE MACHINE-OUTIL

(30) Priorität: 10.02.2009 DE 102009008227
(43) Veröffentlichungstag der Anmeldung: 25.01.2012
(73) Patentinhaber: Sauer Ultrasonic Gmbh, 55758 Stipshausen (DE)
(72) Erfinder: PUCHER, Hans-Jörg, 87629 Füssen (DE); SCHWENK, Gaston, 55469 Simmern (DE)
(74) Vertreter: Beetz & Partner mbB
(86) Internationale Anmeldenummer: PCT/EP2010/000706
(87) Internationale Veröffentlichungsnummer: WO 2010/091821

(56) Entgegenhaltungen:
- EP-A1- 1 902 798
- EP-A2- 1 157 752
- WO-A1-2006/002675
- WO-A1-2008/156116

## Beschreibung

Die vorliegende Erfindung betrifft eine Schnittstelle gemäß dem Oberbegriff des Anspruchs 1 für für ein Werkzeug, insbesondere zum Verbinden mit einer Werkzeugmaschine.

Aus dem Stand der Technik ist eine Vielzahl von schwingungsfähigen Werkzeugaktoren bzw. Werkzeugen für die Bearbeitung von Werkstücken bekannt. Der Vorteil eines schwingenden Werkzeugkopfes besteht darin, dass sich der abgetragene Werkstoff aufgrund der zusätzlichen, zumeist longitudinalen und/oder lateralen Bewegung des Werkzeugkopfes, nur schwerlich an diesem festsetzen kann, so dass sich ein geringer Werkzeugverschleiß bei gleichzeitig verbesserter Oberflächenqualität am Werkstück einstellt.

Für die Erzeugung der Schwingungen im Werkzeugaktor bzw. am Werkzeug werden in der Regel Piezo-Elemente verwendet, die eine eingeleitete elektrische Energie in eine Schwingungsbewegung mit geringer Amplitude wandeln können. Da der Werkzeugaktor bzw. das Werkzeug während des Betriebs in einer Werkzeugmaschine ständig rotiert, kann diese Stromversorgung nicht mittels einer Kabelverbindung erfolgen.

Eine Lösung des Problems mittels schleifender Bürstenkontakte ist in der US 5 140 773 A dargestellt. Dabei wird die elektrische Energie von der Werkzeugmaschine über Bürsten dem Werkzeugaktor zugeführt, so dass dieser sich weiterhin drehen kann. Ein Nachteil des Systems ist dabei der mechanische Verschleiß der Kontaktstellen, weshalb diese regelmäßig überwacht und ggf. austauscht werden müssen.

Eine berührungslose Alternative zur Energieübertragung stellen induktive Energieübertragungseinrichtungen dar, wobei mittels zweier Spulen, die über einen Luftspalt von ca. 0,2 mm bis 0,5 mm Dicke, voneinander beabstandet sind, die Energie von der Werkzeugmaschine in den Werkzeugaktor übertragen wird. Nachteilig bei diesem Aufbau ist die daraus resultierende Anordnung der Spule für den Werkzeugaktor im Bereich von dessen Längsende, da der vorstehend beschriebene Luftspalt für eine effektive Energieübertragung nicht über dieses Maß hinaus verändert werden kann. Beim Einsatz von automatisierten Werkzeughandlingsystemen wird dieser Bereich jedoch für den Kontakt mit den Greifelementen des Werkzeughandlingsystems benötigt, so dass derartige Werkzeugaktoren bzw. Werkzeug bislang einem automatisierten Wechsel nicht zugänglich sind.

Aus der DE 101 37 055 A1 ist eine Kupplungsvorrichtung für das Verbinden einer Spindel mit einem Werkzeughalter bekannt, insbesondere für Ultraschallbearbeitungsmaschinen, mit zwei Verbindungselementen von denen ein Verbindungselement an der Spindel und ein Verbindungselement an dem Werkzeughalter angeordnet ist. Die Kupplungsvorrichtung weist ein Verbindungselement mit einem kegelförmigen Zapfen mit einem Außengewinde auf und das andere Verbindungselement weist eine dazu korrespondierende kegelförmige Ausnehmung mit einem Innengewinde auf oder umgekehrt.

Aus der WO 2008/156116 A1 und der WO 2006/002675 A1 sind Werkzeuge bekannt, die über eine SK-Kupplung in eine Werkzeugmaschine eingesetzt und induktiv mit Energie versorgt werden können.

Aus der EP 1902798 A1 ist ein Werkzeug bekannt, das über eine Spezialkupplung in eine Maschine eingesetzt und das induktiv mit Energie versorgt werde kann.

Es ist eine Aufgabe der vorliegenden Erfindung eine Schnittstelle bereitzustellen, mit deren Hilfe eine Werkzeugmaschine mit einer drahtlosen Energieversorgung für einsetzbare Werkzeuge nachgerüstet werden kann.

Diese Aufgabe wird durch die Merkmale des Anspruchs 1 gelöst. Vorteilhafte Ausgestaltungen und bevorzugte Ausführungsbeispiele der Erfindung sind in den Unteransprüchen angegeben.

Es wird eine Schnittstelle bereitgestellt, die einen Grundkörper umfasst, der an einem Längsende einen ersten genormten Verbindungsbereich zum Verbinden mit einer Werkzeugmaschine und an dem gegenüber liegenden Längsende einen komplementären zweiten Verbindungsbereich zum Verbinden mit einem Werkzeug oder einem Werkzeugaktor aufweist. Weiterhin weist die Schnittstelle sowohl mindestens ein Mittel für eine berührungslose Aufnahme von elektrischer Energie und mindestens ein erstes Kontaktmittel für die Übertragung von elektrischer Energie auf, so dass die Schnittstelle mit dem Werkzeugaktor bzw. dem Werkzeug elektrisch leitend verbindbar ist.

Im Folgenden kann unter einer Schnittstelle ein Körper in der Art eines Adapters verstanden werden. Bei dieser Ausführungsform ist der erste Verbindungsbereich mit der Spindelwelle verbindbar und wieder lösbar. Er kann normgerecht ausgebildet sein. Die als Adapter ausgebildete Schnittstelle kann eigens gehandelt werden.

In einer weiteren Ausführungsform kann bei der Schnittstelle der erste Verbindungsbereich die Spindelwelle der Werkzeugmaschine sein bzw. mit ihr einstückig ausgebildet oder unlösbar verbunden sein. Die Verbindung kann stoffschlüssig sein, bspw. eine Schweißverbindung. Die Schnittstelle ist dann mehr oder minder integraler Bestandteil der Werkzeugmaschine. Insoweit kann dann die Schnittstelle als Maschinenanschluss für einen Werkzeugaktor bzw. ein Werkzeug verstanden werden, der in der genannten Weise ausgebildet ist.

Dieser Aufbau der Schnittstelle hat den Vorteil, dass dadurch nun ein automatisiertes Handling des Werkzeugaktors bzw. des Werkzeugs für den Einsatz an einer Werkzeugmaschine möglich ist, da an ihm die klobigen, das automatische Handling behindernden induktiven Energie-Aufnahmen weggelassen werden können, wobei das Werkzeug weiterhin aufgrund der eingeleiteten Schwingungen die gewünschte Reinigung und Selbstschärfung während der mechanischen Bearbeitung des Werkstücks erfährt.

Des Weiteren kann bei Verwendung eines Gehäuses, das die werkzeugmaschinenseitige Spule für die berührungslose Energieübertragung enthält, und im Bereich der Spindel angeordnet ist, der Eintrag von Schmutz in den Luftspalt zwischen den beiden Spulen effektiv verhindert werden.

Unter dem Kontaktmittel für die Übertragung von elektrischer Energie soll primär ein Mittel verstanden werden, mit dessen Hilfe ein physischer metallischer Kontakt zwischen zwei elektrisch leitenden Körpern hergestellt werden kann. Dies kann beispielsweise mittels eines Steckers in dem Grundkörper und einer zugehörigen Buchse in dem Werkzeugaktor bzw. dem Werkzeug, oder vice versa realisiert werden. Weiterhin kann das Kontaktmittel auch in der Art eines Klemmkontakts über Federelemente realisiert werden.

Vorzugsweise kann bei dem Grundkörper der Schnittstelle das mindestens eine Kontaktmittel für die Übertragung von elektrischer Energie im Wesentlichen im Bereich der Oberfläche des zweiten Verbindungsbereichs angeordnet sein. Dadurch können für die Energieübertragung zwischen dem Grundkörper und dem schwingungsfähigen Werkzeug vorzugsweise Stecker, beispielsweise mit vergoldeten Anschlüssen, verwendet werden. Weiterhin können hierfür auch Kontaktmittel in der Art von Federelementen verwendet werden, wodurch die beiden vorstehend genannten Körper ebenfalls elektrisch leitend und mechanisch trennbar verbunden werden können.

Weiterhin können bei der Schnittstelle das mindestens eine Mittel für eine berührungslose Aufnahme von elektrischer Energie und das mindestens eine Kontaktmittel für die Übertragung von elektrischer Energie elektrisch leitend verbunden sein. Dadurch kann die Energie von dem Mittel für eine berührungslose Energieaufnahme zu dem Kontaktmittel übertragen werden. Hierfür können Kabel verwendet werden.

Vorzugsweise kann bei der Schnittstelle der Grundkörper einteilig ausgebildet sein. Ist der Grundkörper ein Bestandteil der Spindelwelle so wird eine einteilige Ausbildung bevorzugt. Dies erlaubt es beispielsweise, dass dieser kostengünstig mittels spanender Bearbeitung hergestellt werden kann. Weiterhin können mittels dieser Konstruktion zusätzliche Montageschritte entfallen, wodurch die Herstellungskosten gesenkt werden können. In einer weiteren Ausführungsform kann der Grundkörper auch mehrteilig ausgebildet sein.

Weiterhin weist bei der Schnittstelle der erste Verbindungsbereich eine genormte Gestaltung auf. Weiterhin weist auch der zweite Verbindungsbereich eine genormte Gestaltung aufweisen, die zur Gestaltung des ersten Verbindungsbereichs gegengleich geformt ist. Hierunter können sämtliche genormte Gestaltungen verstanden werden, die für eine Verbindung zwischen einem Werkzeug und einer Werkzeugmaschine bekannt sind. Insbesondere fällt hierunter die weit verbreitete Industrienorm HSK oder SK. Die genormte Gestaltung des ersten Verbindungsbereichs ermöglicht den Einsatz der Schnittstelle an einer Vielzahl von Werkzeugmaschinen.

Vorzugsweise kann der zweite Verbindungsbereich des Grundkörpers bei einer Schnittstelle eine derartige Gestaltung aufweisen, so dass in diesem der Werkzeugaktor bzw. das Werkzeug aufnehmbar ist und mit dem Grundkörper verdrehfest verbunden werden kann. Bedingt durch die Tatsache, dass sich die Schnittstelle vorzugsweise zusammen mit dem Werkzeugaktor bzw. dem Werkzeug im Betrieb dreht, und der Werkzeugaktor bzw. das Werkzeug hierzu mit dem Grundkörper vorzugsweise formschlüssig und/oder kraftschlüssig verbunden ist, kann in Verbindung mit dem einteiligen Aufbau des Grundkörpers eine sichere Verbindung der beiden Bauteile erzielt werden. Vorzugsweise weist der zweite Verbindungsbereich ebenfalls eine genormte Gestaltung auf, so dass eine Vielzahl von Werkzeugaktoren mit der Schnittstelle verbunden werden kann. Dies ermöglicht wiederum die Handhabung von (schwingungsfähigen) Werkzeugaktoren bzw. Werkzeugen mit vorhandenen Einrichtungen für das Werkzeughandling, wodurch der Einsatz von derartigen Werkzeugaktoren gefördert werden kann.

Die Schnittstelle kann im Betrieb eine rotatorische Bewegung ausführen. Somit kann die Schnittstelle besonders vorteilhaft mit einem Werkzeugaktor eingesetzt werden, so dass neben einer mechanischen Bearbeitung des Werkstücks durch ein Werkzeug auch noch die erwünschte Reinigungswirkung und Selbstschärfung für das Werkzeug aufgrund seiner longitudinalen bzw. lateralen Schwingung realisiert werden kann.

Weiterhin kann bei einer Schnittstelle das mindestens eine Mittel für eine berührungslose Aufnahme von elektrischer Energie zwischen dem ersten Verbindungsbereich und dem zweiten Verbindungsbereich angeordnet sein. Dadurch kann ein möglichst kompakter Aufbau der Schnittstelle erzielt werden.

Vorzugsweise kann bei einer Schnittstelle das mindestens eine Mittel für eine berührungslose Aufnahme von elektrischer Energie mindestens eine Spule aufweisen.

In einer bevorzugten Ausführungsform kann bei der Schnittstelle das zumindest eine Kontaktmittel für die Übertragung von elektrischer Energie auswechselbar sein. Das zumindest eine Kontaktmittel kann so gestaltet sein, dass es beispielweise mittels einer Schraub-, Steck-oder Klemmverbindung mit dem Adapter verbunden werden kann, so dass eine reversible Verbindung mit diesem entsteht. In einer weiteren Ausführungsform des Adapters kann das zumindest eine Kontaktmittel jedoch auch fest mit diesem verbunden sein.

Weiterhin kann eine Schnittstelle mit einem Werkzeugaktor verbunden werden, wobei dieser über wenigstens ein Piezo-System in Schwingung versetzt werden kann. Dabei wird elektrische Energie von dem Piezo-System aufgenommen und der Werkzeugaktor damit in Schwingung versetzt. Falls an dem Werkzeugaktor noch ein Werkzeug montiert ist, dann werden diese Schwingungen auf das drehende Werkzeug übertragen.

Vorzugsweise kann der Werkzeugaktor zur Verbindung mit einer Schnittstelle im Bereich von einem Längsende des Werkzeugaktors eine derartige Gestaltung aufweisen, so dass damit eine Schrumpfsitz-Verbindung zur Verbindung mit einem weiteren Werkzeug realisierbar ist.

Ein weiterer Aspekt der Erfindung betrifft eine Werkzeugmaschine mit einer erfindungsgemäßen Schnittstelle.

Vorteilhafte Ausgestaltungen und weitere Details der vorliegenden Erfindung werden im Folgenden anhand verschiedener Ausführungsbeispiele mit Bezug auf schematische Figuren beschrieben.
Fig. 1 zeigt eine Vorderansicht einer Schnittstelle gemäß der vorliegenden Erfindung,
Fig. 2 zeigt eine seitliche Teilschnittansicht der Schnittstelle gemäß Fig. 1 entlang der Schnittlinie A-A,

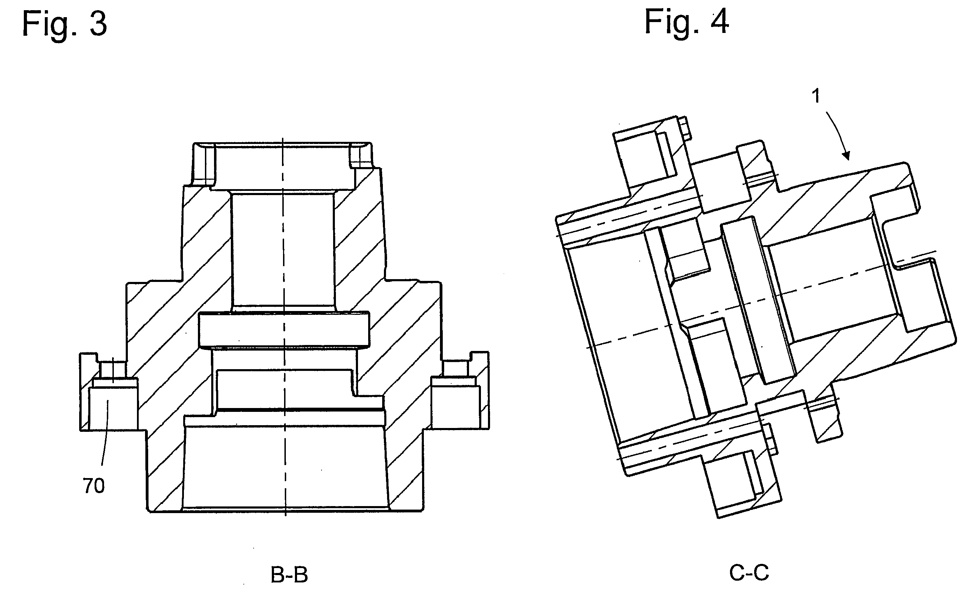

Fig. 3 zeigt eine Schnittansicht der Schnittstelle gemäß Fig. 1 entlang der Schnittlinie B-B,
Fig. 4 zeigt eine Schnittansicht der Schnittstelle gemäß Fig. 1 entlang der Schnittlinie C-C,
Fig. 5 zeigt eine perspektivische Ansicht der Schnittstelle gemäß Fig. 1,
Fig. 6 zeigt eine weitere perspektivische Ansicht der Schnittstelle gemäß Fig. 1,
Fig. 7 zeigt eine Baugruppe bestehend aus einem Werkzeugaktor und der Schnittstelle gemäß Fig. 1, und
Fig. 8 zeigt eine Teilschnittansicht für eine Schnittstelle in einer Werkzeugmaschine.

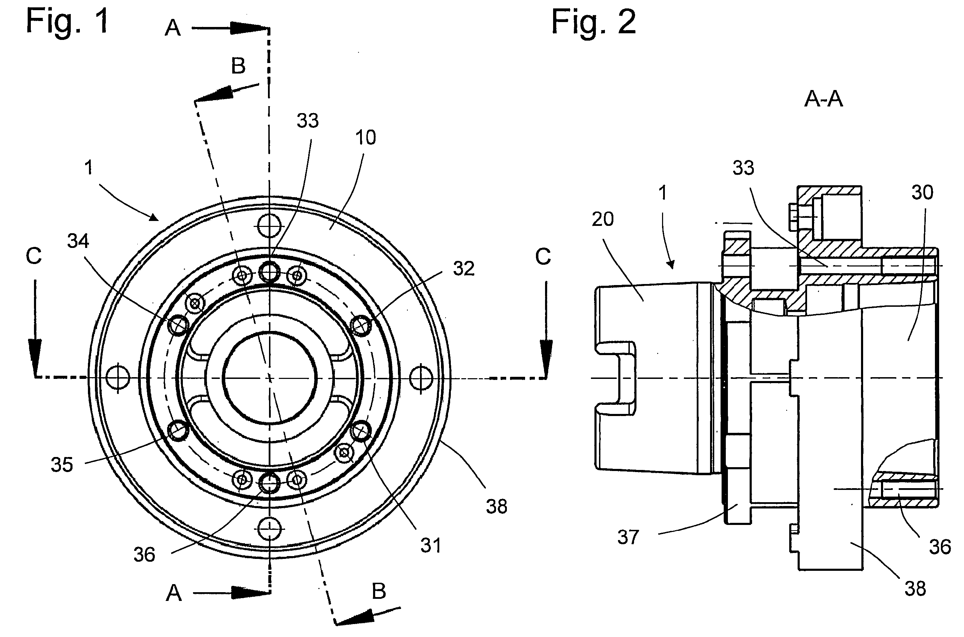

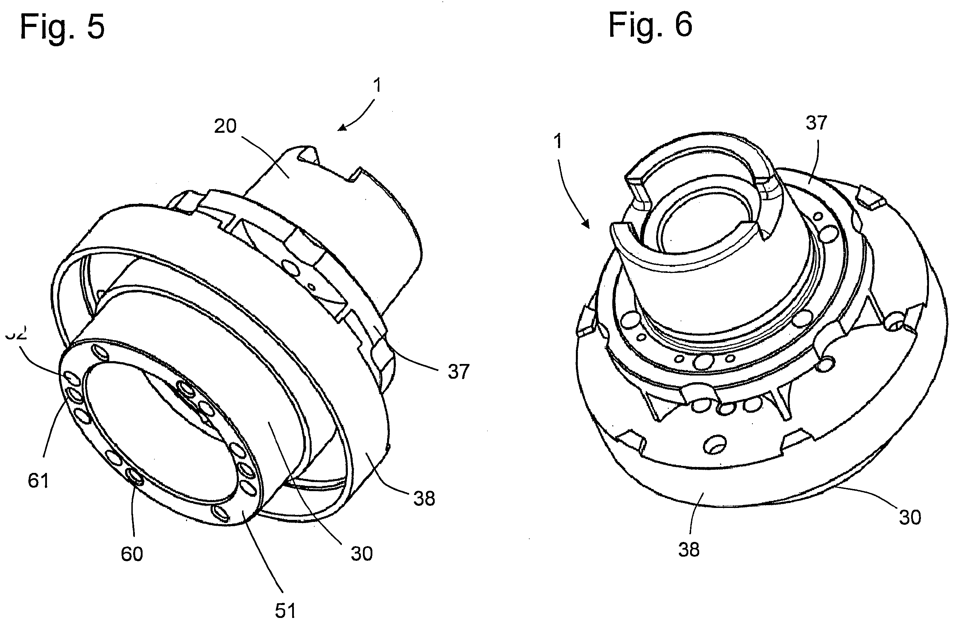

Bezugnehmend auf Fig. 1 und Fig. 6 ist schematisch eine Schnittstelle 1, insbesondere für die Verbindung eines Werkzeugaktors 40 (nicht dargestellt) bzw. eines Werkzeugs 90 (nicht dargestellt) mit einer Werkzeugmaschine (nicht dargestellt).

Die Schnittstelle 1 weist einen Grundkörper 10 auf, der vorzugsweise aus einem elektrisch nichtleitenden Werkstoff besteht. Es kann jedoch ein elektrisch leitender Werkstoff verwendet werden. An einem Längsende des Grundkörpers 10 ist ein erster Verbindungsbereich 20 zum Verbinden der Schnittstelle 1 mit einer Spindel (nicht dargestellt) einer Werkzeugmaschine ausgebildet. An dem gegenüber liegenden Längsende des Grundkörpers 10 ist ein zweiter Verbindungsbereich 30 zur Verbindung mit dem Werkzeugaktor 40 bzw. dem Werkzeug 90 ausgebildet. Sowohl der erste Verbindungsbereich 20 als auch der zweite Verbindungsbereich 30 weisen vorzugsweise zueinander komplementäre genormte Gestaltung auf, so dass diese jeweils mittels genormter Schnittstellen mit den jeweiligen Bauteilen verbunden werden können.

An einem Ende des ersten Verbindungsbereichs 20 ist ein Flansch 37 ausgebildet, der in radialer Richtung eine Vielzahl von Bohrungen 31-36 aufweist. Die Bohrungen 31-36 wiederum sind für die Aufnahme von Röhren (nicht dargestellt) vorgesehen, in denen Druckluft zum Werkzeugaktor 40 bzw. zum Werkzeug 90 hin gefördert werden kann. Beabstandet zu dem Flansch 37 ist in Richtung zum zweiten Verbindungsbereich 30 hin ein Spulenaufnahmebereich 38 ausgebildet, wobei in einer in Umfangsrichtung verlaufenden Nut eine Spule 70 (nicht dargestellt) aufgenommen wird.

Der Grundkörper 10 ist einteilig ausgebildet, so dass die hohen Drehzahlen des Werkzeugaktors 40 bzw. des Werkzeugs 90 mit großer Betriebssicherheit aufgenommen und übertragen werden können.

Bezugnehmend auf Fig. 5 und 6 soll nun der zweite Verbindungsbereich 30 näher beschrieben werden. Dieser weist eine im Wesentlichen zylindrische Gestaltung auf, wobei im Bereich von dessen freien Längsende 51 in Längsrichtung des Grundkörpers 10 eine Vielzahl von Kontakten 54 entlang seines Umfangs ausgebildet sind. Die Vielzahl von Kontakten 54 sind für die Aufnahme von Sensorsignalen von dem Werkzeugaktor 40 bzw. dem Werkzeug 90 vorgesehen, so dass die Schnittstelle 1 in der Lage ist, relevante Betriebsparameter zu Erfassen und einer Überwachungseinheit (nicht dargestellt) zu übermitteln. Weiterhin befinden sich im Bereich des freien Längsendes 51 jeweils ein erstes Kontaktelement 60 (nicht dargestellt) und ein zweites Kontaktelement 61 (nicht dargestellt). Das erste Kontaktelement 60 weist die Form eines vergoldeten Steckers auf, und leitet die induzierte Spannung von der Spule 70 in den Werkzeugaktor 40 bzw. in das Werkzeug 90. Das zweite Kontaktelement 61 ist ebenfalls in der Art eines Steckers ausgebildet und schließt den Stromkreis, indem dieser ebenfalls mit dem Werkzeugaktor 40 bzw. das Werkzeug 90 elektrisch leitend verbunden ist.

Das Werkzeug bzw. Werkzeugaktor weisen für die mechanische und elektrische Verbindung zur Schnittstelle gegengleiche elektrische und mechanische Kontakte auf. Die elektrischen Kontakte sind vorzugsweise sowohl beim Grundkörper als auch beim Werkzeug bzw. Werkzeugaktor innenliegend, so dass das jeweilige Äußere normgerecht gestaltet werden kann.

Durch die Einfügung der Schnittstelle 1 zwischen Spindel und Werkzeug bzw. Werkzeugaktor ist die bekannte Schnittstelle zwischen Maschinenspindel und Werkzeug bzw. Werkzeugaktor in zwei Schnittstellen aufgelöst. Die maschinennähere trägt die bekannte induktive Energieübertragung vom stationären zum rotierenden Teil, ist deshalb außen klobig und nicht normgerecht gebaut und deshalb maschinell nicht lösbar, während die maschinenfernere Schnittstelle kleine, eingebaute elektrische Kontakte statt der induktiven Kopplung hat, deshalb auch außen normgemäß gebaut werden kann und deshalb automatisch betätigbar ist, indem ein Greifarm das normgerechte Äußere des Werkzeugs bzw. Werkzeugaktors ergreift und geeignet betätigt.

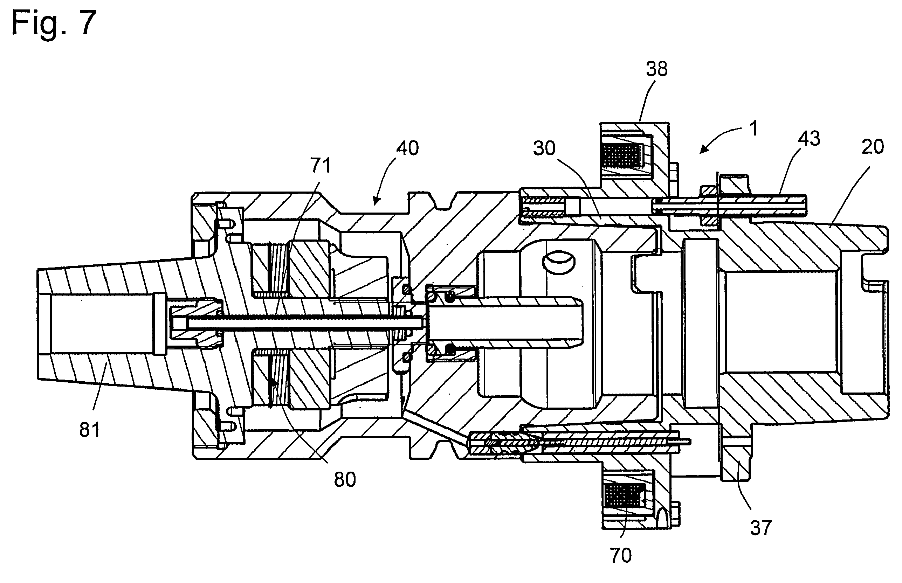

Bezugnehmend auf die Fig. 7 soll nun eine Baugruppe bestehend aus der Schnittstelle 1 und dem Werkzeugaktor 40 beschrieben werden. In den vorstehend beschriebenen Bohrungen 31-36 sind jeweils Röhren 43 eingesetzt, die für die Weiterleitung von Druckluft von der Werkzeugmaschine zum zweiten Verbindungsbereich 30 hin dienen. Mittels dieser Druckluft kann der Verbindungsbereich zwischen dem Werkzeugaktor 40 und der Schnittstelle 1 vor dem Zusammenbau gereinigt werden.

Fig. 7 zeigt zudem die Einbauposition der Spule 70 in den Spulenaufnahmebereich 38 der Schnittstelle 1.

Der Werkzeugaktor 40 wird in dem Grundkörper 10 im Inneren des zweiten Verbindungsbereichs 30 aufgenommen, und dort mittels einer formschlüssigen Verbindung verdrehfest mit diesem verbunden.

Der Werkzeugaktor 40 weist in seinem Inneren ein Piezo-System 80 auf, das aufgrund der über die Kontaktmittel im Werkzeugaktor 40 (nicht dargestellt), welche mit dem ersten Kontaktelement 51 und zweiten Kontaktelement 52 des Grundkörpers 10 elektrisch leitend verbunden sind, mittels der in den Werkzeugaktor 40 eingeleiteten Energie den Werkzeugaktor 40 in Schwingung versetzen kann. Beim Verbinden von Grundkörper 10 und Werkzeugaktor 40 werden die einander entsprechenden elektrischen Kontakte der beiden Bauteile miteinander in Kontakt gebracht, so dass der Werkzeugaktor 40 über die so etablierte metallische/galvanische Verbindung die von der Spule aufgenommene Energie (AC) empfängt.

Entlang der Längsachse des Werkzeugaktors 40 verläuft ein Kühlmittelkanal 71, der von der Werkzeugmaschine mit einem Kühlmittel versorgt wird, und zur Kühlung des Werkzeugs 90 (nicht dargestellt) dient. An dem freien Längsende 81 des Werkzeugaktors 40 ist ein konischer Sitz für eine Schrumpfsitz-Verbindung zur Verbindung mit dem Werkzeug 90 ausgebildet. Die Schrumpfsitz-Verbindung ist beim Einsatz von schwingenden Werkzeugen besonders geeignet, da die Schwingungseinleitung vom Werkzeugaktor 40 in das Werkzeug 90 dabei nur geringe Verluste aufweist. Es können jedoch auch andere etablierte Verbindungen zu dem Werkzeug 90 zum Einsatz.

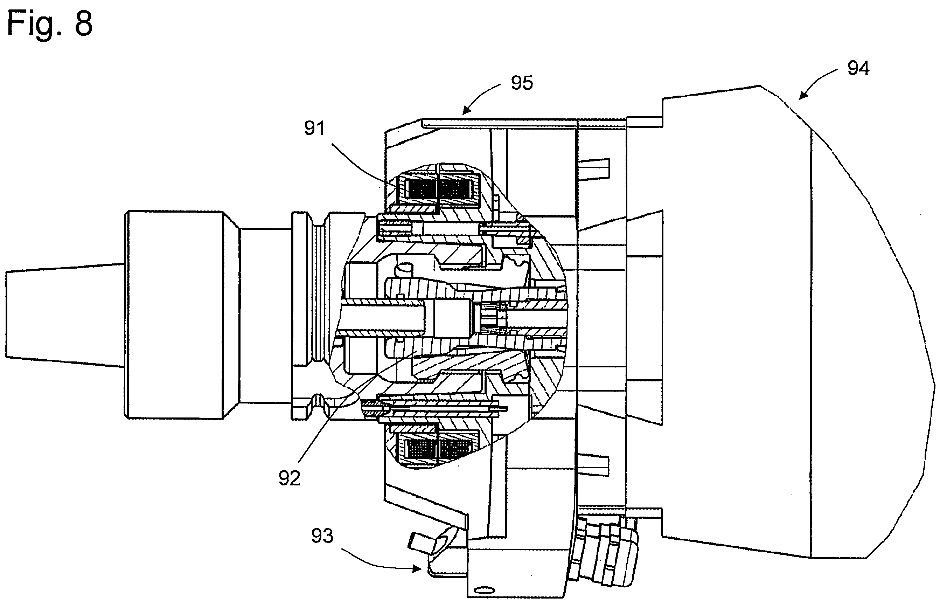

Fig. 8 zeigt in einer Teilschnittansicht einer Schnittstelle 1, der mit einer Spindel 94 einer Werkzeugmaschine verbunden ist, sowie den Werkzeugaktor 40 von Fig. 7. Der Verbindungsbereich zwischen der Schnittstelle 1 und der Spindel 94 wird durch ein Gehäuse 95 von der Produktionsumgebung abgeschirmt. Im unteren Bereich des Gehäuses 95 ist eine stationär angeordnete Werkzeugmaschinenspule 91 angeordnet, die zusammen mit der Spule 70 des Adapters 1 die induktive Energieübertragung zwischen der Werkzeugmaschine und der Schnittstelle 1 realisiert.

Weiterhin ist an dem Gehäuse 95 eine Kühleinrichtung 93 angeordnet, die während der Bearbeitung des Werkstücks (nicht dargestellt) dieses mit einem Kühlmittel beaufschlagen kann.

Der Werkzeugaktor 40 und der Grundkörper 10 werden mittels eines Werkzeugspanners 92 in axialer Richtung von der Werkzeugmaschine gesichert.

Die gezeigten Ausführungsbeispiele sind rein illustrativ und nicht beschränkend auszulegen. An ihnen können zahlreiche Änderungen vorgenommen werden, ohne den Schutzumfang der Ansprüche zu verlassen.

## Patentansprüche

1. Schnittstelle für die Verbindung eines schwingungsfähigen Werkzeugs mit einer Werkzeugmaschine, mit
- einen Grundkörper (10), der an einem ersten Längsende einen ersten Verbindungsbereich (20) zum Verbinden mit einer Werkzeugmaschine (100) aufweist, und an dem dem ersten Längsende gegenüber liegenden zweiten Längsende einen zweiten Verbindungsbereich (30) zum Verbinden mit einem Werkzeug (90) aufweist,
wobei die Schnittstelle (1) mindestens ein Mittel (50) für eine berührungslose Aufnahme von elektrischer Energie und ein Kontaktmittel (60) für die Übertragung von elektrischer Energie aufweist, so dass die Schnittstelle (1) mit dem Werkzeug (90) elektrisch leitend verbindbar ist,
**dadurch gekennzeichnet, dass** der erste Verbindungsbereich (20) und der zweite Verbindungsbereich (30) eine genormte Gestaltung aufweisen und zueinander komplementär ausgebildet sind.

2. Schnittstelle nach Anspruch 1, **dadurch gekennzeichnet, dass** das mindestens eine Kontaktmittel (60) für die Übertragung von elektrischer Energie im Wesentlichen im Bereich der Oberfläche des zweiten Verbindungsbereichs (30) angeordnet ist.

3. Schnittstelle nach Anspruch 1 oder 2, **dadurch gekennzeichnet, dass** das mindestens eine Mittel (50) für eine berührungslose Aufnahme von elektrischer Energie und das mindestens eine Kontaktmittel (60) für die Übertragung von elektrischer Energie elektrisch leitend verbunden sind.

4. Schnittstelle nach zumindest einem der Ansprüche 1-3, **dadurch gekennzeichnet, dass** der Adaptergrundkörper (10) einteilig ausgebildet ist.

5. Schnittstelle nach zumindest einem der Ansprüche 1-4, **dadurch gekennzeichnet, dass** der zweite Verbindungsbereich (30) eine derartige Gestaltung aufweist, dass in diesem das Werkzeug (90) aufnehmbar ist und mit dem Grundkörper (10) verdrehfest verbunden werden kann.

6. Schnittstelle nach zumindest einem der Ansprüche 1-5, **dadurch gekennzeichnet, dass** dieser im Betrieb eine rotatorische Bewegung ausführt.

7. Schnittstelle nach zumindest einem der Ansprüche 1-6, **dadurch gekennzeichnet, dass** das mindestens eine Mittel (50) für eine berührungslose Aufnahme von elektrischer Energie zwischen dem ersten Verbindungsbereich (20) und dem zweiten Verbindungsbereich (30) angeordnet ist.

8. Schnittstelle nach zumindest einem der Ansprüche 1-7, **dadurch gekennzeichnet, dass** das mindestens eine Mittel (50) für eine berührungslose Aufnahme von elektrischer Energie mindestens eine Spule (70) aufweist.

9. Schnittstelle nach zumindest einem der Ansprüche 1-8, **dadurch gekennzeichnet, dass** das zumindest eine Kontaktmittel (60) für die Übertragung von elektrischer Energie auswechselbar ist.

10. Schnittstelle nach einem oder mehreren der vorherigen Ansprüche, **dadurch gekennzeichnet, daß** der erste Verbindungsbereich (20) die 157,1-70760EP
Spindelwelle der Werkzeugmaschine ist oder mit dieser unlösbar verbunden ist oder mit ihr lösbar verbindbar ist.

11. Schnittstelle nach zumindest einem der Ansprüche 1-9, **dadurch gekennzeichnet, dass** sie ein Adapter ist.

12. Werkzeugmaschine mit einer Schnittstelle (1) nach zumindest einem der Ansprüche 1-11.

## Claims

1. Interface for the connection of an oscillatory tool with a machine-tool, comprising
- a base body (10) having at a first longitudinal end thereof a first connection area (20) for connecting with a machine-tool (100) and at the second longitudinal end opposite to the first longitudinal end a second connection area (30) for connecting with a tool (90),
wherein the interface (1) comprises at least one means (50) for a non-contact reception of electric energy and at least one contact means (60) for the transmission of electric energy so that the interface (1) is connectable with the tool (90) by means of an electrically conductive connection,
**characterised in that** the first connection area (20) and the second connection area (30) comprise a standardised configuration and are configured complementary to each other.

2. Interface according to claim 1, **characterised in that** the at least one contact means (60) for the transmission of electric energy is arranged substantially in the area of the surface of the second connection area (30).

3. Interface according to claim 1 or 2, **characterised in that** the at least one means (50) for a non-contact reception of electric energy and the at least one contact means (60) for the transmission of electric energy are connected by means of an electrically conductive connection.

4. Interface according to at least one of claims 1 to 3, **characterised in that** the adaptor base body (10) is configured as one single piece.

5. Interface according to at least one of claims 1 to 4, **characterised in that** the second connection area (30) is configured such that the tool (90) can be fitted therein and can be connected with the base body (10) so as to be non-turnable.

6. Interface according to at least one of claims 1 to 5, **characterised in that** in operation it performs a rotatory movement.

7. Interface according to at least one of claims 1 to 6, **characterised in that** the at least one means (50) for a non-contact reception of electric energy is arranged between the first connection area (20) and the second connection area (30).

8. Interface according to at least one of claims 1 to 7, **characterised in that** the at least one means (50) for a non-contact reception of electric energy comprises at least one coil (70).

9. Interface according to at least one of claims 1 to 8, **characterised in that** the at least one contact means (60) for the transmission of electric energy is exchangeable.

10. Interface according to one or more of the preceding claims, **characterised in that** the first connection area (20) is the spindle shaft of the machine-tool or is connected therewith non-detachably or detachably therefrom.

11. Interface according to at least one of claims 1 to 9, **characterised in that** it is an adaptor.

12. Machine-tool comprising an interface (1) according to at least one of claims 1 to 11.

## Revendications

1. Interface destinée à relier un outil oscillant et une machine-outil, comprenant
- un corps de base (10) qui, au niveau d'une première extrémité longitudinale, présente une première zone de raccordement (20) pour relier à une machine-outil (100) et, au niveau d'une deuxième extrémité longitudinale située à l'opposé de la première extrémité longitudinale, une deuxième zone de raccordement (30) pour relier un outil (90),
- l'interface (1) présentant au moins un moyen (50) permettant une absorbation sans contact d'énergie électrique et un moyen de contact (60) permettant un transfert d'énergie électrique de manière à ce que l'interface (1) puisse être raccordée par conduction électrique avec l'outil (90),
**caractérisée en ce que** la première zone de raccordement (20) et la deuxième zone de raccordement (30) présentent une conception normée et sont de forme complémentaire.

2. Interface selon la revendication 1, **caractérisée en ce qu'**au moins un moyen de contact (60) permettant le transfert d'énergie électrique est disposé essentiellement dans la zone de la surface de la deuxième zone de raccordement (30).

3. Interface selon les revendications 1 ou 2, **caractérisée en ce qu'**au moins un moyen (50) permettant une absorption sans contact d'énergie électrique et au moins un moyen de contact (60) permettant le transfert d'énergie électrique sont raccordés par conduction électrique.

4. Interface selon au moins l'une quelconque des revendications 1 à 3, **caractérisée en ce que** le corps de base adaptateur (10) est constitué d'une seule partie.

5. Interface selon au moins l'une quelconque des revendications 1 à 4, **caractérisée en ce que** la deuxième zone de raccordement (30) présente une forme lui permettant d'accueillir l'outil (90), celui-ci pouvant être solidaire du corps de base (10) avec un blocage en rotation.

6. Interface selon au moins l'une quelconque des revendications 1 à 5, caractérisée en que celui-ci exécute un mouvement de rotation en cours de fonctionnement.

7. Interface selon au moins l'une quelconque des revendications 1 à 6, **caractérisée en ce qu'**au moins un moyen (50) permettant une absorption sans contact d'énergie électrique se trouve entre la première zone de raccordement (20) et la deuxième zone de raccordement (30).

8. Interface selon au moins l'une quelconque des revendications 1 à 7, **caractérisée en ce qu'**au moins un moyen (50) permettant une absorption sans contact d'énergie électrique présente au moins une bobine (70).

9. Interface selon au moins l'une quelconque des revendications 1 à 8, **caractérisée en ce qu'**au moins un moyen de contact (60) permettant le transfert de l'énergie électrique peut être remplacé.

10. Interface selon une ou plusieurs des revendications précédentes, **caractérisée en ce que** la première zone de raccordement (20) est l'arbre de la broche de la machine-outil ou est reliée à celle-ci de façon inséparable ou peut être reliée à celle-ci de façon séparable.

11. Interface selon au moins l'une quelconque des revendications 1 à 9, **caractérisée en ce qu'**elle est un adaptateur.

12. Machine-outil équipée d'une interface (1) selon au moins l'une quelconque des revendications 1 à 11.
